# EUROPEAN PATENT SPECIFICATION

(11) **EP 1 190 613 B1**
(45) Date of publication and mention of the grant of the patent: **26.09.2007**
(21) Application number: 01202647.2
(22) Date of filing: 10.07.2001
(51) Int. Cl.: A01B 79/00, A01D 78/10, A01B 63/32

(54) **An implement for treating a soil surface**
Bodenoberflächenbearbeitungsgerät
Outil pour le travail d'une surface de sol

(30) Priority: 25.07.2000 NL 1015801
(43) Date of publication of application: 27.03.2002
(73) Proprietor: Lely Enterprises AG, 6300 ZUG (CH)
(72) Inventor: Geerts, Cornelis Franciscus Johannes, 4926 RJ Lage Zwaluwe (NL); Koorn, Maarten, 3123 CP Schiedam (NL); van der Lely, Alexander, 3065 NA Rotterdam (NL)
(74) Representative: Corten, Maurice Jean F.M.

(56) References cited:
- EP-A- 0 776 598
- WO-A-86/05353
- DE-A- 2 150 555
- FR-A- 2 302 022
- US-A- 3 820 314
- US-A- 4 279 138

## Description

The invention relates to an implement for treating a soil surface according to the preamble of claim 1.

Such an implement is known from EP-A1-0776598.

It is an object of the invention to improve such an implement. In accordance with the invention as claimed this is achieved in that the implement is provided with adjusting means that adjust automatically the orientation of at least one treating element relative to the soil surface, on the basis of the measuring results of the measuring means. In the situation that the treating unit is designed as a rake for example, it is thus possible to realize good raking results, even in case of an uneven soil surface, due to the fact that the orientation of the rake tines of the rake is individually adjusted relative to the ground. It will be obvious that, when the treating unit is constituted by an other agricultural implement, such as a mowing machine for example, this agricultural machine has similar advantages.

According to a further inventive feature, the measuring means comprise one or more sensors which, seen in the direction of travel of the implement, feel and/or scan the soil surface in front of the relevant treating element. According to again another inventive feature, the sensors are disposed on the frame. In a preferred embodiment of the invention, the sensors are designed as ultrasonic sensors. According to again another inventive feature, the sensors may comprise a camera. However, it will be obvious that also many other sensors than the sensors mentioned above may be applied. According to again another inventive feature, the adjusting means comprise at least one control element which is suitable for adjusting a relevant treating element in height, seen in the direction of travel of the implement. According to an inventive feature, the control element controls a hingeable construction constituting part of the adjusting means. According to a further inventive feature, the hingeable construction comprises an arm with a horizontal hinge pin. In a further embodiment of the invention the control element comprises a second hingeable construction constituting part of the adjusting means. According to a further inventive feature, the arm of the hingeable construction comprises a second horizontal hinge pin. In a preferred embodiment of the invention the hingeable construction comprises a quadrangular pivot construction. According to a further inventive feature, the quadrangular pivot construction is designed as a parallelogram. According to another inventive feature, it is further possible to adjust the treating unit in height relative to the soil surface. In the situation that three control elements are applied, it is possible to adjust the treating unit omnidirectionally relative to the soil surface. In a preferred embodiment of the invention the control elements are designed as control cylinders or stepper motors. For the purpose of realizing the above-mentioned tilting movement in a simple manner, according to the invention the adjusting means comprise one or more ball joints. According to again another aspect of the invention, the adjusting means comprise a clinometer which is suitable for determining the angle that is enclosed by a relevant treating element and/or a relevant treating unit and the soil surface. According to again another aspect of the invention, the adjusting means comprise height measuring means which are suitable for determining the height assumed by a relevant treating element and/or a relevant treating unit relative to the soil surface. According to a further inventive feature, the rake comprises tine arms which are pivoted through a curve path. According to another inventive feature, the implement comprises a driving speed sensor. According to another further inventive feature, the implement comprises an rpm-sensor which is suitable for determining the number of revolutions of the treating unit and/or the treating element. With the aid of the driving speed sensor and the rpm-sensor it is possible, depending on the conditions of the surface to be treated, optimally to adjust the working depth of the treating unit and/or the treating element. With a rake or a tedder, at an unchanging number of revolutions of the treating unit and at an increased driving speed, it is possible to choose a deeper adjustment of the treating unit and/or the treating element.

The invention will now be explained in further detail with reference to the accompanying figures, in which
Figure 1 is a side view of a first embodiment of an implement according to the invention;
Figure 2 is a side view of a second embodiment of the implement according to the invention, and
Figure 3 is a side view of a third embodiment of the implement according to the invention.

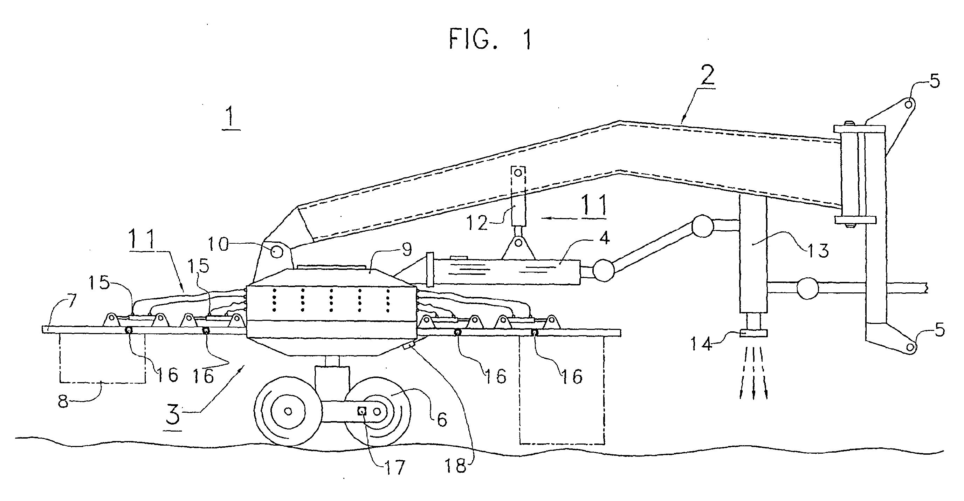

Figure 1 is a side view of a first embodiment of an implement 1 according to the invention, said implement being provided with a frame 2 comprising a treating unit 3 which is designed as a rake in the present embodiment. The rake 3 is motor-drivable via a transmission 4. The frame 2 is further provided with coupling means 5 with the aid of which the implement can be coupled to a vehicle, such as a tractor for example. In the present embodiment the rake 3 is supported by a wheel set 6 that is designed as a tandem wheel set. The rake 3 is further provided with a plurality of treating elements comprising all tine arms 7 having at their ends rake tines 8. The tine arms 7 are controlled via a central box 9 with a curve path therein. The central box 9 is connected with the frame 2 via a horizontal hinge pin 10. Between the frame 2 and the transmission 4 there are further provided first adjusting means 11 with the aid of which the treating unit 3 can be adjusted relative to the soil surface by pivoting about the horizontal hinge pin 10. In the present embodiment the adjusting means 11 comprise a control cylinder 12 which is preferably designed as a servo-pneumatic control cylinder. The implement 1 is further provided with measuring means 13 which are suitable for feeling and/or scanning the soil surface to be treated and determining ground irregularities, such as slopes and/or holes for example, that may be present therein. The measuring means 13 comprise a plurality of sensors 14 which are disposed near the front side of the frame which are capable of feeling and/or scanning the soil at least over the full working width of the implement 1. The treating elements are also provided with adjusting means 11 which are suitable for adjusting a relevant treating element in height relative to the soil. The adjusting means 11 comprise two control elements 15 which are provided on each of the tine arms 7. In the present embodiment the control elements 15 are designed as a control cylinder which is capable of pivoting part of the tines about a horizontal axis 16. Each of the tine arms 7 comprising two hingeable constructions that are controllable by the control cylinders, it is possible to displace the rake tines 8 more or less parallel in height relative to the soil. However, it will be obvious that it is also possible to equip a tine arm 7 with one hingeable construction with the aid of which the rake tine is adjusted in height. In the latter situation, however, it is not possible to adjust the rake tines as optimally as in the situation of two hingeable constructions. The implement is further provided with a driving speed sensor 17 which is disposed near the wheel set 6 and which is suitable for determining the driving speed of the implement 1. On the central box 9 there is further provided an rpm-sensor 18 which is suitable for determining the number of revolutions of the tine arms 7. When there is measured by the measuring means 13 a difference in height in the soil, the rake tines 8 of the rake 3 are adjusted with the aid of the adjusting means 11 in such a manner that the distance from the rake tines to the soil is maintained. In this way the rake tines are prevented from moving through the soil or extending far above the soil, so that they cannot take along grass or hay.

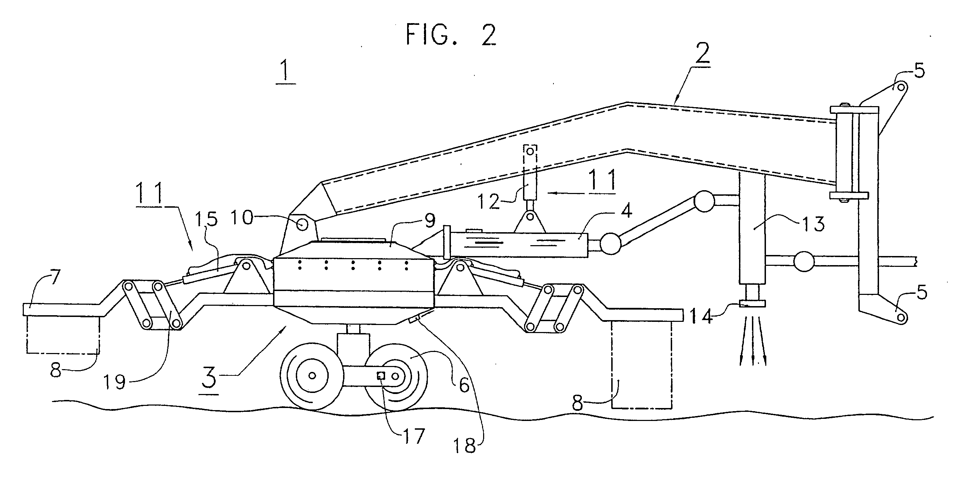

Figure 2 shows a second embodiment of an implement according to the invention, in which parts corresponding to those in the first embodiment are indicated by the same reference numerals. In the second embodiment of the invention the hingeable construction comprises a quadrangular pivot construction 19 which is designed as a parallelogram construction in the present embodiment. Such an embodiment has the advantage that the ends of the rake tines can be adjusted in height parallel to the ground by means of one control cylinder.

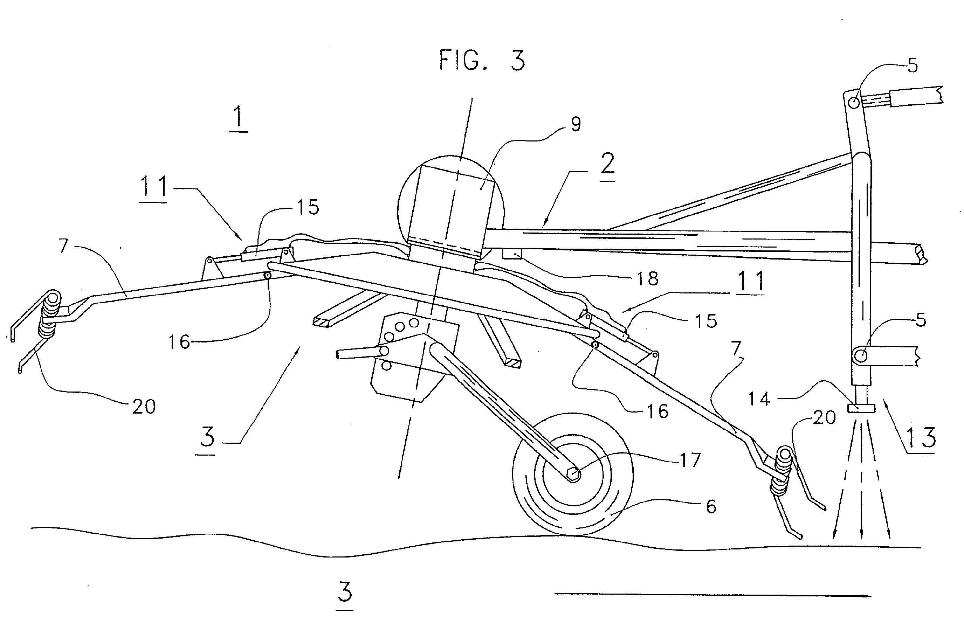

Figure 3 shows a third embodiment of an implement according to the invention, in which parts corresponding to those in the first and second embodiment are indicated by the same reference numerals. In the third embodiment the implement 1 is designed as a tedder with tedder members 3. At the end of the tine arms 7 there are provided tedder tines 20. In general, with a tedder one hingeable construction per tine arm 7 suffices, because the orientation of the tedder tine 20 hardly changes, the working width of a tedder tine being smaller than that of a rake tine.

## Claims

1. An implement for treating a soil surface, such as for example raking together grass and/or hay, said implement (1) being provided with a frame (2) comprising at least one treating unit (3) provided with treating elements for treating the soil surface, the treating unit (3) being designed as motor-drivable tedder or motor-drivable rake, **characterised in that** the implement (1) is provided with measuring means (13) which are suitable for feeling and/or scanning the soil surface to be treated and for determining ground irregularities, such as slopes and/or holes for example, that may be present in the soil surface, and **in that** the implement (1) is provided with adjusting means (11) that adjust automatically the orientation of at least one treating element relative to the soil surface, on the basis of the measuring results of the measuring means (13).

2. An implement as claimed in claim 1, **characterized in that** the measuring means (13) comprise one or more sensors (14) which, seen in the direction of travel of the implement (1), feel and/or scan the soil surface in front of the relevant treating element.

3. An implement as claimed in claim 2, **characterized in that** the sensors (14) are disposed on the frame (2).

4. An implement as claimed in claim 3, **characterized in that** the sensors (14) are designed as ultrasonic sensors.

5. An implement as claimed in claim 3, **characterized in that** the sensors (14) comprise a camera.

6. An implement as claimed in any one of the preceding claims, **characterized in that** the adjusting means (11) comprise at least one control element (15) which is suitable for adjusting in height the relevant treating element.

7. An implement as claimed in claim 6, **characterized in that** the control element (15) controls a hingeable construction constituting part of the adjusting means (11).

8. An implement as claimed in claim 7, **characterized in that** the hingeable construction comprises an arm with a horizontal hinge pin (16).

9. An implement as claimed in claim 7 or 8, **characterized in that** the control element (15) comprises a second hingeable construction constituting part of the adjusting means (11).

10. An implement as claimed in claim 9, **characterized in that** the arm of the hingeable construction comprises a second horizontal hinge pin (16).

11. An implement as claimed in any one of claims 6 to 10, **characterized in that** the hingeable construction comprises a quadrangular pivot construction (19).

12. An implement as claimed in claim 11, **characterized in that** the quadrangular pivot construction (19) is designed as a parallelogram.

13. An implement as claimed in any one of claims 6 to 12, **characterized in that** the control elements (12, 15) are designed as control cylinders or stepper motors.

14. An implement as claimed in any one of the preceding claims, **characterized in that** the treating unit (3) is adjustable in height relative to the soil surface.

15. An implement as claimed in claim 14, **characterized in that** the treating unit (3) is omnidirectionally adjustable relative to the height.

16. An implement as claimed in any one of the preceding claims, **characterized in that** the adjusting means (11) comprise a ball joint.

17. An implement as claimed in any one of the preceding claims, **characterized in that** the adjusting means (11) comprise a clinometer which is suitable for determining the angle enclosed by a relevant treating element and/or a relevant treating unit (3) and the soil surface.

18. An implement as claimed in any one of the preceding claims, **characterized in that** the adjusting means (11) comprise height measuring means which are suitable for determining the height assumed by the treating element and/or the treating unit (3) relative to the soil surface.

19. An implement as claimed in any one of the preceding claims, **characterized in that** the rake comprises tine arms (7) which are pivoted through a curve path.

20. An implement as claimed in any one of the preceding claims, **characterized in that** the implement comprises a driving speed sensor (17).

21. An implement as claimed in any one of the preceding claims, **characterized in that** the implement comprises an rpm-sensor (18) which is suitable for determining the number of revolutions of the treating unit (3) and/or the treating element.

## Patentansprüche

1. Vorrichtung zum Bearbeiten einer Bodenoberfläche, wie z. B. zum Zusammenrechen von Gras und/oder Heu, wobei die Vorrichtung (1) mit einem Rahmen (2) versehen ist, der mindestens eine Bearbeitungseinheit (3) umfasst, die mit Bearbeitungselementen zum Bearbeiten der Bodenoberfläche versehen ist, wobei die Bearbeitungseinheit (3) als motorisch antreibbarer Zetter oder motorisch antreibbarer Rechwender ausgeführt ist,
**dadurch gekennzeichnet, dass** die Vorrichtung (1) mit einer Messvorrichtung (13) versehen ist, die geeignet ist, die zu bearbeitende Bodenoberfläche abzufühlen und/oder abzutasten und eventuell in der Bodenoberfläche vorhandene Bodenunebenheiten, wie z. B. Böschungen und/oder Löcher, zu ermitteln, und dass die Vorrichtung (1) mit einer Stellvorrichtung (11) versehen ist, die auf der Basis der Messergebnisse der Messvorrichtung (13) die Ausrichtung mindestens eines Bearbeitungselements relativ zu der Bodenoberfläche automatisch einstellt.

2. Vorrichtung nach Anspruch 1,
**dadurch gekennzeichnet, dass** die Messvorrichtung (13) einen oder mehrere Sensoren (14) umfasst, die in Fahrtrichtung der Vorrichtung (1) gesehen die Bodenoberfläche vor dem entsprechenden Bearbeitungselement abfühlen und/oder abtasten.

3. Vorrichtung nach Anspruch 2,
**dadurch gekennzeichnet, dass** die Sensoren (14) an dem Rahmen (2) angeordnet sind.

4. Vorrichtung nach Anspruch 3,
**dadurch gekennzeichnet, dass** die Sensoren (14) als Ultraschallsensoren ausgeführt sind.

5. Vorrichtung nach Anspruch 3,
**dadurch gekennzeichnet, dass** die Sensoren (14) eine Kamera umfassen.

6. Vorrichtung nach einem der vorhergehenden Ansprüche,
**dadurch gekennzeichnet, dass** die Stellvorrichtung (11) mindestens ein Steuerelement (15) umfasst, das geeignet ist, das jeweilige Bearbeitungselement in der Höhe einzustellen.

7. Vorrichtung nach Anspruch 6,
**dadurch gekennzeichnet, dass** das Steuerelement (15) eine Gelenkvorrichtung steuert, die Teil der Stellvorrichtung (11) ist.

8. Vorrichtung nach Anspruch 7,
**dadurch gekennzeichnet, dass** die Gelenkvorrichtung einen Arm mit einem horizontalen Gelenkbolzen (16) umfasst.

9. Vorrichtung nach Anspruch 7 oder 8,
**dadurch gekennzeichnet, dass** das Steuerelement (15) eine zweite Gelenkvorrichtung umfasst, die Teil der Stellvorrichtung (11) ist.

10. Vorrichtung nach Anspruch 9,
**dadurch gekennzeichnet, dass** der Arm der Gelenkvorrichtung einen zweiten horizontalen Gelenkbolzen (16) umfasst.

11. Vorrichtung nach einem der Ansprüche 6 bis 10,
**dadurch gekennzeichnet, dass** die Gelenkvorrichtung eine Viergelenk-Schwenkvorrichtung (19) umfasst.

12. Vorrichtung nach Anspruch 11,
**dadurch gekennzeichnet, dass** die Viergelenk-Schwenkvorrichtung (19) als Parallelogramm ausgeführt ist.

13. Vorrichtung nach einem der Ansprüche 6 bis 12,
**dadurch gekennzeichnet, dass** die Steuerelemente (12, 15) als Steuerzylinder oder Schrittmotoren ausgeführt sind.

14. Vorrichtung nach einem der vorhergehenden Ansprüche,
**dadurch gekennzeichnet, dass** die Bearbeitungseinheit (3) relativ zu der Bodenoberfläche höhenverstellbar ist.

15. Vorrichtung nach Anspruch 14,
**dadurch gekennzeichnet, dass** die Bearbeitungseinheit (3) bezüglich der Höhe in allen Richtungen verstellbar ist.

16. Vorrichtung nach einem der vorhergehenden Ansprüche,
**dadurch gekennzeichnet, dass** die Stellvorrichtung (11) ein Kugelgelenk umfasst.

17. Vorrichtung nach einem der vorhergehenden Ansprüche,
**dadurch gekennzeichnet, dass** die Stellvorrichtung (11) ein Klinometer umfasst, das geeignet ist, den von einem entsprechenden Bearbeitungselement und/oder einer entsprechenden Bearbeitungseinheit (3) mit der Bodenoberfläche gebildeten Winkel zu ermitteln.

18. Vorrichtung nach einem der vorhergehenden Ansprüche,
**dadurch gekennzeichnet, dass** die Stellvorrichtung (11) eine Höhenmessvorrichtung umfasst, die geeignet ist, die von dem Bearbeitungselement und/oder der Bearbeitungseinheit (3) relativ zur Bodenoberfläche eingenommene Höhe zu ermitteln.

19. Vorrichtung nach einem der vorhergehenden Ansprüche,
**dadurch gekennzeichnet, dass** der Rechen Zinkenarme (7) umfasst, die über eine Kurvenbahn geschwenkt werden.

20. Vorrichtung nach einem der vorhergehenden Ansprüche,
**dadurch gekennzeichnet, dass** die Vorrichtung einen Fahrgeschwindigkeitssensor (17) umfasst.

21. Vorrichtung nach einem der vorhergehenden Ansprüche,
**dadurch gekennzeichnet, dass** die Vorrichtung einen Drehzahlsensor (18) umfasst, der geeignet ist, die Anzahl der Umdrehungen der Bearbeitungseinheit (3) und/oder des Bearbeitungselements zu ermitteln.

## Revendications

1. Machine de traitement d'une surface de sol, comme par exemple le ratissage d'herbe et/ou de foin, ladite machine (1) étant équipée d'un cadre (2) comprenant au moins une unité de traitement (3) dotée d'éléments de traitement servant à traiter la surface du sol, l'unité de traitement (3) étant conçue comme une faneuse pouvant être actionnée par un moteur ou un râteau pouvant être actionné par un moteur, **caractérisé en ce que** la machine (1) est dotée de moyens de mesure (13) qui sont adaptés pour palper et/ou scanner la surface du sol à traiter et pour déterminer les irrégularités du sol, comme des pentes et/ou trous par exemple, qui peuvent être présents dans la surface du sol, et **en ce que** la machine (1) est équipée de moyens de réglage (11) qui règlent automatiquement l'orientation d'au moins un élément de traitement par rapport à la surface du sol, sur la base de résultats de mesures des moyens de mesure (13).

2. Machine selon la revendication 1, **caractérisée en ce que** les moyens de mesure (13) comportent un ou plusieurs capteurs (14) qui, vus dans le sens de déplacement de la machine (1), palpent et/ou scannent la surface du sol face à l'élément de traitement correspondant.

3. Machine selon la revendication 2, **caractérisée en ce que** les capteurs (14) sont disposés sur le cadre (2).

4. Machine selon la revendication 3, **caractérisée en ce que** les capteurs (14) sont conçus comme capteurs ultrasoniques.

5. Machine selon la revendication 3, **caractérisée en ce que** les capteurs (14) comprennent une caméra.

6. Machine selon l'une quelconque des revendications précédentes, **caractérisée en ce que** les moyens de réglage (11) comprennent au moins un élément de commande (15) qui convient pour régler la hauteur de l'élément de traitement correspondant.

7. Machine selon la revendication 6, **caractérisée en ce que** l'élément de commande (15) commande une construction articulée faisant partie de moyens de réglage (11).

8. Machine selon la revendication 7, **caractérisée en ce que** la construction articulée comprend un bras avec un axe d'articulation (16) horizontal.

9. Machine selon la revendication 7 ou 8, **caractérisée en ce que** l'élément de commande (15) comprend une deuxième construction articulée faisant partie des moyens de réglage (11).

10. Machine selon la revendication 9, **caractérisée en ce que** le bras de la construction articulée comprend un deuxième axe d'articulation (16) horizontal.

11. Machine selon l'une quelconque des revendications 6 à 10, **caractérisé en ce que** la construction articulée comprend une construction à pivot quadrangulaire (19).

12. Machine selon la revendication 11, **caractérisé en ce que** la construction à pivot quadrangulaire (19) est conçue comme un parallélogramme.

13. Machine selon l'une quelconque des revendications 6 à 12, **caractérisé en ce que** les éléments de commande (12, 15) sont conçus comme des cylindres de commande ou des moteurs pas à pas.

14. Machine selon l'une quelconque des revendications précédentes, **caractérisé en ce que** l'unité de traitement (3) est réglable en hauteur par rapport à la surface du sol.

15. Machine selon la revendication 14, **caractérisé en ce que** l'unité de traitement (3) peut être réglée de manière omnidirectionnelle par rapport à la hauteur.

16. Machine selon l'une quelconque des revendications précédentes, **caractérisé en ce que** les moyens de réglage (11) comprennent un joint sphérique.

17. Machine selon l'une quelconque des revendications précédentes, **caractérisé en ce que** les moyens de réglage (11) comprennent un clinomètre qui est adapté pour déterminer l'angle formé par un élément de traitement correspondant et/ou une unité de traitement (3) correspondante et la surface du sol.

18. Machine selon l'une quelconque des revendications précédentes, **caractérisé en ce que** les moyens de réglage (11) comprennent des moyens de mesure de hauteur qui sont adaptés pour déterminer la hauteur adoptée par l'élément de traitement et/ou l'unité de traitement (3) par rapport à la surface du sol.

19. Machine selon l'une quelconque des revendications précédentes, **caractérisé en ce que** le râteau comprend des bras à fourche (7) qui pivotent à travers une trajectoire courbe.

20. Machine selon l'une quelconque des revendications précédentes, **caractérisé en ce que** la machine comprend un capteur de vitesse de rotation (17).

21. Machine selon l'une quelconque des revendications précédentes, **caractérisé en ce que** la machine comprend un capteur de tours par minute (18) qui est adapté pour déterminer le nombre de tours par minute de l'unité de traitement (3) et/ou de l'élément de traitement.
